# EUROPÄISCHE PATENTSCHRIFT

(11) **EP 2 054 456 B1**
(45) Veröffentlichungstag und Bekanntmachung des Hinweises auf die Patenterteilung: **09.03.2011**
(21) Anmeldenummer: 07786611.9
(22) Anmeldetag: 08.08.2007
(51) Int. Cl.: C08G 18/08, C08G 18/28, C08G 18/34, C08G 18/62, C08G 18/79, C08G 18/80, C09D 175/04

(54) **VERFAHREN ZUR HERSTELLUNG WASSERVERDÜNNBARER BZW. WASSERLÖSLICHER BLOCKIERTE POLYISOCYANATE FÜR DIE HERSTELLUNG VON WÄSSRIGEN 1K-PUR-BESCHICHTUNGEN MIT SCHNELLER PHYSIKALISCHER ANTROCKNUNG**
PROCESS FOR THE PREPARATION OF WATER-DILUTABLE OR WATER-SOLUBLE BLOCKED POLYISOCYANATES FOR THE PRODUCTION OF AQUEOUS 1K PUR COATINGS WITH RAPID PARTIAL PHYSICAL DRYING
PROCÉDÉ DE PRÉPARATION DE POLYISOCYANATES BLOQUÉS, DILUABLES OU SOLUBLES DANS L'EAU, POUR LA PRÉPARATION DE REVÊTEMENTS AQUEUX 1K-PUR AVEC SÉCHAGE PHYSIQUE RAPIDE

(30) Priorität: 18.08.2006 DE 102006038941
(43) Veröffentlichungstag der Anmeldung: 06.05.2009
(73) Patentinhaber: Bayer MaterialScience AG, 51368 Leverkusen (DE)
(72) Erfinder: DÖRR, Sebastian, 40597 Düsseldorf (DE); BAUMBACH, Beate, 51399 Burscheid (DE); KUETTNER, Wolfram, 51467 Bergisch Gladbach (DE); GERTZMANN, Rolf, 51377 Leverkusen (DE)
(86) Internationale Anmeldenummer: PCT/EP2007/006988
(87) Internationale Veröffentlichungsnummer: WO 2008/019781

(56) Entgegenhaltungen:
- EP-A- 0 566 953
- EP-A- 0 576 952
- EP-A- 0 802 210
- EP-A- 0 942 023
- EP-A- 1 193 277

## Beschreibung

Die vorliegende Erfindung betrifft Verfaren zur Herstellung neuer wasserverdünnbarer, bzw. wasserlöslicher blockierte Polyisocyanate, welche die Herstellung von physikalisch schnell antrocknenden, einbrennbaren Einkomponenten-Polyurethanlacken ermöglichen, die eine verminderte Thermovergilbung aufweisen und zu trübungsfreien Beschichtungen fuhren, und ihre Verwendung.

Bei der Beschichtung von Substraten werden zunehmend wässrige Bindemittel, insbesondere Polyurethan (PUR)-Dispersionen mit blockierten Isocyanatgruppen verwendet. Die Herstellung von wässrigen PUR-Dispersionen und die Verfahren zur Beschichtung und zum Einbrennen sind grundsätzlich aus dem Stand der Technik bekannt.

Wässrige Einkomponenten-Polyurethan-Einbrennlacke, deren Vernetzerkomponente im wesentlichen aus blockierten Polyisocyanaten (BNCO-Vernetzer, Vernetzer-Dispersionen) besteht, weisen jedoch eine langsame physikalische Antrocknung nach dem Auftragen der Beschichtung auf. Dies führt zu Problemen beim Transport der beschichteten Gegenstände zum Einbrennofen, in dem die chemische Vernetzung stattfindet. Die Gegenstände können beispielsweis an Förderbändern bzw. Handschuhen kleben. Es ist daher eine lange Trocknungsperiode vor dem Einbrennvorgang erforderlich.

Weiterhin weisen Einkomponenten-Polyurethan-Einbrennlacke mit blockierten Isocyanatgruppen eine ausgesprochene Tendenz zur Vergilbung bei hohen Einbrenntemperaturen bzw. bei langer Dauer des Einbrennvorgangs, oder beim Überbrennen auf.

Ein weiteres Problem bei der Verarbeitung Einkomponenten-Polyurethan-Einbrennlacken mit blockierten Isocyanatgruppen ist häufig eine Trübung des Lackfilms, die besonders ein Beschichten von durchsichtigen Substraten (wie beispielsweise Glas) zum Erhalt von transparenten beschichteten Systemen verhindert.

In EP-A 0802210 werden wasserverdünnbare Polyisocyanat-Venetzer mit blockierten Isocyanatgruppen beschrieben. Um das Problem der Thermovergilbung zu umgehen wird die Verwendung von Hydrazid-Gruppen tragenden Verbindungen vorgeschlagen. Die Glasbeschichtung gemäß EP-A 0807650 unter Verwendung solcher Polyisocyanat-Vernetzer führt zwar zu klaren, nicht vergilbten Filmen, jedoch ist das physikalische Antrocknungsverhalten der Systeme sehr langsam und damit unvorteilhaft. In EP-A 1193277 werden wasserdispergierbare mit ε-Caprolactam blockierte Polyisocyanat-Vernetzer für die Herstellung von Einbrennlacken beschrieben.

Die Mischblockierung von Polyisocyanaten mit Lactamen ist aus dem Bereich der nicht-wässrigen Polyurethansysteme gut bekannt und beispielsweise in DE-A 10156897, DE-A 4416750, EP-A 0403044, DE-A 3128743 und US 5455374 beschrieben. Rückschlüsse auf verminderte Vergilbung oder ein vorteilhaftes Antrocknungsverhalten insbesondere wässriger PUR-Systeme durch den Einsatz einer lactambasierten Mischblockierung sind jedoch nicht möglich.

Aufgabe der vorliegenden Erfindung war es nun ein Verfahren zur Herstellung, wasserverdünnbarer, bzw wasserlöslicher blockierte Polyisocyanate bereitzustellen, die in Form einer wässrigen Dispersion nach Abmischen mit Polyolkomponenten zu einbrennbaren Einkomponenten-Polyurethanlacken mit schneller physikalischer Antrocknung nach Applikation und geringer Thermovergilbung beim Einbrennen, bzw. auch beim Überbrennen führen. Weiterhin war es die Aufgabe, mit dem erhaltenen Beschichtungsmittel eine trübungsfreie Beschichtung von Substraten zu ermöglichen.

Es wurde nun überraschenderweise gefunden, dass gerade hydrophilierte Polyisocyanate, die eine Mischblockierung aus einem Lactam und einem weiteren Blockierungsmittel aufweisen, diese Anforderungen erfüllen.

Gegenstand der Erfindung ist ein Verfahren zur Herstellung wässriger Dispersionen mischblockierter Polyisocyanatprepolymere, bei dem aus
a) 100 Äquivalenten mindestens einer Polyisocyanatkomponente
b) 10 bis 75 Äquivalenten eines Lactams oder mehrerer Lactame, als Blockierungsmittel für Isocyanatgruppen
c) 2 bis 50 Äquivalenten weiterer von b) verschiedener Blockierungsmittel für Isocyanatgruppen,
d) 0 bis 15 Äquivalenten mindestens eines, isocyanatreaktive Gruppen enthaltenden, nichtionischen Hydrophilierungsmittels
e) 0,5 bis 13 Äquivalenten mindestens eines, isocyanatreaktive Gruppen enthaltenden, (potentiell) anionischen Hydrophilierungsmittels
f) 0 bis 30 Äquivalenten einer oder mehrerer aminogruppenfreier Verbindungen des Molekulargewichtsbereichs von 62 bis 250 g/mol, die entweder 2 bis 4 OH-Gruppen oder wenigstens eine OH-Gruppe und eine weitere isocyanatreaktive Gruppe aufweisen und
g) 0 bis 30 Äquivalenten einer oder mehrerer (cyclo)aliphatischer Verbindungen des Molekulargewichtsbereichs von 32 bis 300 g/mol, die entweder 2 bis 4 Aminogruppen oder wenigstens eine Aminogruppe und eine weitere isocyanatreaktive Gruppe aufweisen,
ein Polyisocyanatprepolymer hergestellt wird,
dieses, während oder nach Umsetzung der Komponenten a) bis g) miteinander, in Wasser dispergiert oder gelöst wird,
und vor, während oder nach der Dispergierung, bzw. dem Löseschritt die potentiell anionischen Gruppen der in e) eingesetzten Hydrophilierungsmittel mit einer Base zumindest teilweise deprotoniert werden.

Die Mengenangaben der Komponenten b) bis g) in Äquivalenten beziehen sich auf die jeweiligen Mengen an isocyanatreaktiven Gruppen der in diesen Komponenten enthaltenen Verbindungen, wobei die in a) eingesetzte Isocyanatkomponente 100 Äquivalente an freien zur Reaktion zur Verfügung stehenden NCO-Gruppen aufweist.

In-einer bevorzugten Ausfuhrungsweise zur Herstellung der wässrigen Dispersionen mischblockierter Polyisocyanatprepolymere werden die Reaktionspartner a) bis f) miteinander umgesetzt und anschließend in Wasser dispergiert bzw. gelöst, wobei vor, während oder nach diesem Schritt die zumindest teilweise Deprotonierung der potentiell anionischen Gruppen der in e) eingesetzten Hydrophilierungsmittel mit einer Base erfolgt. Die gegebenenfalls zugesetzte Komponente g) wird bevorzugt nach der Dispergierung des Prepolymers in Wasser zugesetzt.

In einer besonders bevorzugten Ausführungsweise wird zuerst die Komponente a) mit den Komponenten d), e) und f) umgesetzt, danach erfolgt die Umsetzung mit Komponente b) und anschließend mit Komponente c). Anschließend wird zur Deprotonierung eine Base zugesetzt und die Reaktionsmischung in Wasser dispergiert. Abschließend kann Komponente g) zugegeben werden.

Die Mengenverhältnisse der Reaktionspartner werden bevorzugt so gewählt, dass das ÄquivalentVerhältnis der Isocyanatkomponente a) zu gegenüber Isocyanat reaktionsfähigen Gruppen der Komponenten b), c), d), f) und g) bei 1:0,7 bis 1:1,3 bevorzugt bei 1:0,85 bis 1:1,1 liegt. In die Berechnung dieses Äquivalentverhältnisses gehen weder die Säuregruppen der Komponente e) noch das zur Herstellung von Lösungen oder Dispersionen der Polyurethane verwendete Wasser oder Lösungsmittel noch das zur Deprotonierung der Säuregruppen eingesetzte Deprotonierungsmittel ein.

Als geeignete Polyisocyanate finden in Komponente a) die dem Fachmann an sich bekannten NCO-funktionellen Verbindungen einer Funktionalität von bevorzugt 2 oder mehr Verwendung. Dies sind typischerweise aliphatische, cycloaliphatische, araliphatische und/oder aromatische Di- oder Triisocyanate sowie deren höhermolekulare Folgeprodukte mit Iminooxadiazindion-, Isocyanurat-, Uretdion-, Urethan-, Allophanat-, Biuret-, Harnstoff , Oxadiazintrion, Oxazolidinon-, Acylharnstoff- und/oder Carbodiimid-Strukturen, die zwei oder mehr freie NCO-Gruppen aufweisen.

Beispiele für solche Di- oder Triisocyanate sind Tetramethylendiisocyanat, Cyclohexan-1,3- und 1,4-diisocyanat, Hexamethylendiisocyanat (HDI), 1-Isocyanato-3,3,5-trimethyl-5-isocyanatomethyl-cyclohexan (Isophorondiisocyanat, IPDI), Methylen-bis-(4-isocyanatocyclohexan), Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat, Naphtylen-1,5-diisocyanat, 4-Isocyanatomethyl-1,8-octandiisocyanat (Nonantriisocyanat, Triisocyanatononan, TIN) und/oder 1,6,11 - Undecantriisocyanat sowie deren beliebige Mischungen und ggf. auch Mischungen anderer Di-, Tri- und/oder Polyisocyanate.

Solche Polyisocyanate haben typischerweise Isocyanatgehalte von 0,5 bis 60 Gew.%, bevorzugt 3 bis 30 Gew.-%, besonders bevorzugt 5 bis 25 Gew.-%:

Bevorzugt werden im erfindungsgemäBen Verfahren die höhermolekularen Verbindungen mit Isocyanurat-, Urethan-, Allophanat-, Biuret-, Iminooxadiazintrion-, Oxadiazintrion- und/oder Uretdiongruppen auf Basis aliphatischer und/oder cycloaliphatischer Diisocyanate eingesetzt.

Besonders bevorzugt werden im erfindungsgemäßen Verfahren in Komponente a) Verbindungen mit Biuret-, Iminooxadiazindion,- Isocyanurat- und/oder Uretdiongruppen auf Basis von Hexamethylendiisocyanat, Isophorondiisocyanat und/oder 4,4'-Diisocyanatodicyclohexylmethan eingesetzt.

Ganz besonders bevorzugt werden Polyisocyanate mit Isocyanuratstruktur auf Basis von Isophorondiisocyanat eingesetzt.

Als Blockierungsmittel der Komponente b) werden Lactame (cyclische Amide) einsetzt, die über ein amidisches H-Atom verfügen. Beispiele sind λ-Butyrolactam, (2-Pyrrolidon), δ-Valerolactam und/oder ε-Caprolactarn, bevorzugt ist ε-Caprolactam. Komponente b) wird in einer Menge von bevorzugt 30 bis 65 Äquivalenten, bezogen auf die NCO-Gruppen der Isocyanatkomponente a), eingesetzt.

Als Komponente c) können die für die Blockierung von Isocyanatgruppen in der Fachwelt an sich bekannten monofunktionellen Blockierungsmittel eingesetzt werden, die nicht in Komponente b) enthalten sind. Beispiele sind Phenole, Oxime, wie Butanonoxim, Acetonoxim oder Cyclohexanonoxim, Amine wie N-tert.-Butyl-benzylamin oder Diisopropylamin, 3,5-Dimethylpyrazol, Triazol, Ester enthaltend deprotonierbaren Gruppen, wie Malonsäurediethylester, Acetessigsäureethylester, bzw. deren Gemische und/oder Gemische mit anderen Blockierungsmitteln. Bevorzugt sind Butanonoxim, Acetonoxim, 3,5-Dimethylpyrazol und/oder deren Gemische, besonders bevorzugt ist Butanonoxim. Komponente c) wird in einer Menge von bevorzugt 10 bis 30 Äquivalenten, bezogen auf die NCO-Gruppcn der Isocyanatkomponente a), eingesetzt.

Die Hydrophilierungskomponente d) besteht aus mindestens einer isocyanatreakive Gruppen aufweisenden nichtionisch hydrophilierend wirkenden Verbindung. Dies sind z.B. Polyoxyalkylenether, die mindestens eine Hydroxy- oder Aminogruppe, sowie eine oder mehrere Oxyalkyleneinheiten, von denen wenigstens eine eine Oxyethyleneinheit ist, enthalten. Diese Polyoxyalkylenether sind in an sich bekannter Weise durch Alkoxylierung geeigneter Startermoleküle zugänglich.

Geeignete Startermoteküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und-Nonanole; n-Decanol; n-Dodecanol, n-Tetradecanol, n-Hexadecanol, n-Octadecanol, Cyclohexanol, die isomeren Methylcyclohexanole oder Hydroxymethylcyclohexan, 3 Ethyl-3-hydroxymethyloxetan oder Tetrahydrofufurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin. Diisopropylamin. Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Bevorzugt ist die blockweise Addition von Ethylenoxid und Propylenoxid an den Starter.

Bei den Polyalkylenoxidpolyethern handelt es sich entweder um reine Polyethylenoxidpolyether oder gemischte Polyalkylenoxidpolyether, deren Alkylenoxideinheiten bevorzugt zu mindestens 30 mol-%, besonders bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol% Ethylenoxid- und maximal 60 mol% Propylenoxideinheiten aufweisen.

Der Gehalt an Ethylenoxideinheiten liegt bezüglich des Gesamtfestgehaltes der Komponenten a) bis g) unter 30 Gew.-%, bevorzugt unter 20 Gew.-%, besonders bevorzugt unter 15 Gew.-%.

Komponente d) wird in einer Menge von bevorzugt 3 bis 8 Äquivalenten, bezogen auf die NCO-Gruppen der Isocyanatkomponente a), eingesetzt.

Die Hydrophilierungskomponente e) besteht aus mindestens einer (potentiell) anionischen Verbindung mit mindestens einer gegenüber Isocyanatgruppen reaktionsfähigen Gruppe.

Vorzugsweise handelt es sich bei diesen Verbindungen um mindestens eine, bevorzugt eine oder zwei Hydroxylgruppen aufweisende Carbonsäuren oder um Salze derartiger Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder Gemische derartiger Säuren.

Bevorzugt wird als Komponente-e) Dimethylolpropionsäure und/order Hydroxypivalinsäure verwendet.

Die freien Säuregruppen, insbesondere Carboxylgruppen, stellen die vorstehend genannten "potentiell anionischen" Gruppen dar, während es sich bei den durch Neutralisation mit Basen erhaltenen salzartigen Gruppen, insbesondere Carboxylatgruppen, um die vorstehend angesprochenen "anionischen" Gruppen handelt.

Komponente e) wird in einer Menge von bevorzugt 5 bis 9 Äquivalenten, bezogen auf die NCO-Gruppen der Isocyanatkomponente a), eingesetzt. Als isocyanatreaktive Gruppen werden in diesem Fall die Alkoholgruppen definiert; die Carbonsäure - und/oder Carboxylatgruppen werden nicht als isocyanatreakive Gruppen gewertet.

Als Kettenverlängerungskomponente f) kommen beispielsweise Di-, Tri- und/oder Polyole in Betracht. Beispiele sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Rizinusöl, Glycerin und/oder Gemische der genannten Produkten, ggf. mit weiteren Di-, Tri- und/oder Polyolen. Auch ethoxilierte und/oder propoxilierte Di-, Tri- und/oder Polyole wie z.B. ethoxiliertes und/oder propoxiliertes Trimethylolpropan, Glycerin und/oder Hexandiol-1,6 können eingesetzt werden.

Auch die Verwendung von Verbindungen, die neben mindestens einer Hydroxygruppe auch eine oder mehrere Thiolgruppen wie 1,2-Hydroxyethanthiol enthalten, ist möglich.

Bevorzugt werden als Komponente f) Butandiol-1,4, Butandiol-1,3, 2,2-Dimethyl-1,3-propandiol, Hexandiol-1,6 und/oder Trimethylolpropan verwendet.

Bevorzugt werden in f) Verbindungen der vorstehend genannten Art mit Molekulargewichten von 62 bis 200 g/mol eingesetzt.

Komponente f) wird in einer Menge von bevorzugt 3 bis 15 Äquivalenten, bezogen auf die NCO-Gruppen der Isocyanatkomponente a), eingesetzt.

Als Kettenverlängerungskomponente g) können isocyanatreaktive organische Di- oder Polyamine wie 1,2-Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 4,4-Diaminodicyclohexylmethan, und/oder Dimethylethylendiamin eingesetzt werden.

Darüber hinaus können als komponente g) auch Verbindungen, die neben einer primären Aminogruppe auch sekundäre Aminogruppen oder neben einer Aminogruppe (primär oder sekundär) auch OH-Gruppen oder SH-Gruppen aufweisen, eingesetzt werden.

Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1- Methylaminobutan, Alkanolamine wie N-Aminoethylethanolamin, Ethanolamin, Diethanolamin, 3-Aminopropanol, 1-Aminopropanol, Neopentanolamin, N-Methylethanol- und/oder N-Methylisopropanolamin und Alkanthiolamine, wie 1-Aminopropanthiol.

Als Komponente g) werden bevorzugt Di- oder Polyamine verwendet, wie Ethylendiamin, Isophorondiamin. 1,6-Diaminohexan und/oder 4,4-Diaminodicyclohexylmethan.

Bevorzugt werden in Komponente g) Verbindungen der vorstehend genannten Art mit Molekulargewichten von 60 bis 300 g/mol eingsetzt.

Komponente g) wird in einer Menge von bevorzugt 0 bis 10 Äquivalenten, bezogen auf die NCO-Gruppen der Isocyanatkomponente a), eingesetzt.

Zur Kettenverlängerung ist auch die Verwendung von Gemischen der Komponenten f) und g) möglich.

Neben einer Kettenverlängerung durch Umsetzung mit den Komponenten f) und/oder g) können auch freie NCO-Gruppen mit Wasser beispielsweise bei der Dispergierung unter Aminbildung reagieren, wobei die so gebildeten primären Aminogruppen wiederum mit freien NCO-Gruppen unter Kettenverlängerung abreagieren.

Bei der Herstellung der erfindungsgemäßen Dispersion können auch Lösemittel mitverwendet werden bzw. die Rohstoffe als Lösungen eingesetzt werden. Beispiele für geeignete Lösemittel sind N-Methylpyrrolidon, N-Ethylpyrrolidon, Xylol, Toluol, Butylacetat, Methoxypropylacetat, Aceton oder Methylethylketon.

Werden flüchtige, wasser(teil)mischbare Lösemittel wie Aceton oder Methylethylketon verwendet, werden diese typischerweise nach der Dispergierung in Wasser destillativ abgetrennt. Diese Verfahrensweise wird auch als Aceton- bzw. Sluny-Verfahren bezeichnet. Der Vorteil liegt in einer reduzierten Viskosität bei der Herstellung des Prepolymers, ohne dass das Lösemittel in der fertigen Dispersion noch vorhanden ist.

Weiterhin ist es möglich, nach der Abreaktion der Isocyanatgruppen Lösemittel hinzu zu geben. Hierbei können auch protische Lösemittel wie Alkohole zum Einsatz kommen, die beispielsweise der Stabilisierung der Dispersion oder der Verbesserung von Lackeigenschaften dienen.

Die Menge des als Dispergiermedium verwendeten Wassers wird im allgemeinen so bemessen, dass 20 bis 60 gew.-%ige, vorzugsweise 30 bis 45 gew.-%ige Dispersionen bezogen auf Festgehalt in Wasser resultieren.

Beispiele für Deprotonierungsmittel zur Überführung der potentiell anionischen Gruppen in ihre anionische Form sind basische Verbindungen wie Natriumhydroxid, Kaliumhydroxid, Ammoniak, primäre oder sekundäre Amine, wie Diisopropanolamin oder 2-Amino-2-methyl-1-propanol tertiäre Amine wie Triethylamin, Dimethyl-cyclohexylamin, Düsopropylcyclohexylamin, Diisopropylethylamin, Triethanolamin, Methyldiethanolamin, N,N-Dimethyl-aminoethanol, oder N-Methylmorpholin, oder deren beliebige Gemische.

Bevorzugte Deprotonierungsmittel sind tertiäre Amine wie Triethylamin, Diisopropylethylanin und N,N-Dimethylethanolamin, besonders bevorzugt ist N,N-Dimethylethanolamin.

Die Menge des eingesetzten Deprotonierungsmittels wird im Allgemeinen so bemessen, dass der Deprotonierungsgrad der in den erfindungsgemäßen Polyurethanen vorhandenen Carbonsäuregruppen (molares Verhältnis von eingesetztem Amin/Hydroxid zu vorhandenen Säuregruppen) mindestens 40 %, bevorzugt 70 % bis 130 %, besonders bevorzugt 90 bis 110 % beträgt. Die Deprotonierung kann dabei vor, während oder nach dem Dispergier- bzw. Löseschritt erfolgen. Bevorzugt ist jedoch die Deprotonierung vor der Wasserzugabe.

Zur Beschleunigung der Urethanisierung bei der Prepolymerherstellung können dem Reaktionsgemisch auch Katalysatoren zugesetzt werden. Geeignete Katalysatoren sind beispielsweise tertiäre Amine, Zinn-, Zink-, oder Wismutverbindungen oder basische Salze. Bevorzugt sind Dibutylzinndilaurat und -octoat.

Ein weiterer Gegenstand der Erfindung sind die nach dem beschriebenen Verfahren erhaltenen wässrigen Dispersionen mischblockierter Polyisocyanatprepolymere sowie die darin enthaltenen Prepolymere selbst.

Zur Herstellung von Beschichtungsmittel werden die erfindungsgemäß hergestellten Dispersionen üblicherweise mit in Wasser löslichen oder dispergierbaren Polyhydroxyverbindungen und gegebenenfalls Hilfs- und Zusatzstoffen abgemischt.

Geeignete Polyhydroxylverbindungen für diesen Einsatzzweck sowie weitere Details bezüglich der Herstellung und Anwendung derartiger Einbrennlacke sind dem Fachmann an sich bekannt. Bevorzugt sind dies die an sich bekannten wäßrigen bzw. wasserverdünnbaren Bindemittel auf Basis von Polyhydroxypolyestern, Polyhydroxypolyurethanen, Polyhydroxypolyethern, Polycarbonat-Diolen oder von Hydroxylgruppen aufweisende Polymerisaten, wie den an sich bekannten Polyhydroxypolyacrylaten, Polyacrylatpolyurethanen und/oder Polyurethanpolyacrylaten.

Diese sind üblicherweise hydrophil modifiziert, wie beispielsweise in EP-A-0 157 291, EP-A-0 498156oder EP A 0 427 028 beschrieben.

Solche Polyhydroxylverbindungen weisen im Allgemeinen eine Hydroxylzahl von 20 bis 200, bevorzugt von 50 bis 130 mg KOH/g auf.

In den erfindungsgemäßen Beschichtungsmitteln können neben den erfindungswesentlichen Dispersionen auch andere alkoholreaktive Verbindungen wie Aminovemetzerharze wie Melaminharze und/oder Harnstoffharze zur zusätzlichen Vernetzung beim Einbrennen mit eingesetzt werden. Ebenfalls möglich ist die Verwendung weiterer hydrophiler Polyisocyanate.

Als Hilfs- und Zusatzstoffe können die an sich üblichen Stoffe wie Pigmente, Füllstoffe, Verlaufsmittel, Entschäumer, Katalysatoren zugesetzt werden. Zur Verbesserung der Lackhaftung können die Lacke handelsübliche Additive wie beispielsweise Mercaptosilane wie 3-Mercaptopropyltrimethoxysilan, Epoxyalkylsilane wie 3-Glycidyloxypropyltriethoxysilan, Aminoalkylsilane wie 3-Aminopropyltriethoxysilan, deren Hydrolyseprodukte oder Mischungen dieser Komponenten enthalten.

Die Herstellung der erfindungsgemäßen Beschichtungsmittel erfolgt nach an sich bekannten Methoden.

Zur Beschichtung können die erfindungsgemäßen Beschichtungsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10 bis 120 µm liegen. Das Aushärten der getrockneten Filme erfolgt durch Einbrennen im Temperaturbereich von 90 bis 200°C, bevorzugt 130 bis 190°C, besonders bevorzugt 140 bis 180°C. Auch eine Aushärtung unter dem Einfluss von Mikrowellenstrahlung ist möglich. Vor dem Einbrennen kann eine physikalische Trocknung des Films erfolgen, beispielsweise bei Temperaturen zwischen 20 und 90°C.

### Beispiele

Sofern nicht abweichend vermerkt, beziehen sich alle Prozentangaben auf Gewichtsprozent.

Sofern nicht abweichend vermerkt, beziehen sich alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrelationsspektroskopie (Gerät: Malvem Zetasizer 1000, Malvern Inst. Limited) bestimmt.

Die Festkörpergehalte wurden ermittelt durch Erhitzen einer ausgewogenen Probe auf 120°C. Bei Gewichtskonstanz wurde durch erneutes Auswiegen der Probe Festkörpergehalt berechnet.

Die Kontrolle auf freie NCO-Gruppen wurde mittels IR-Spektroskopie (Bande bei 2260 cm⁻¹) durchgeführt.

Die Haftung wurde mittels Gitterschnitt DIN EN ISO 2409 bestimmt.

Die Pendelhärte nach König wurde gemäß DIN 53157 bestimmt.

Die Thermovergilbung wurde nach der CIELAB-Methode entsprechend DIN 6174 bestimmt.

### Chemikalien:

### Desmodur Z 4470 M/X:

Aliphatisches Polyisocyanat auf Basis von Isophorondiisocyanat 70%ig gelöst in einer Mischung aus Methoxypropylacetat und Xylol (1/1), Isocyanatgehalt ca. 12 %, Bayer MaterialScience AG, Leverkusen, DE

### Carbowax 750:

Methoxypolyethylenglykol der mittleren Molmasse von 750 g/mol, The Dow Chemical Company, Stade, DE.

### Bayhydrol A 145:

Wasserverdünnbare, OH-funktionelle Polyacrylatdispersion ca. 45%ig in Wasser/Solventnaphtha 100/ 2-Butoxyethanol, neutralisiert mit Dimethylethanolamin, Verhältnis ca. 45,6 : 4 : 4 : 1,4; OH-Gehalt ca. 7,3 %, Bayer MaterialScience AG, Leverkusen, DE

### Baybydrol VP LS 2239:

Wasserverdünnbare, hydroxylgruppenhaltige Polyurethandispersion, ca. 35%ig in Wasser / NMP (60 : 5), OH-Gehalt ca. 1,6 %, Bayer MaterialScience AG, Leverkusen, DE

### Bayhydur VP LS 2240:

Hydrophilierter, blockierter Polyisocyanatvernetzer auf Basis Desmodur W, ca. 35%ig in Wasser/MPA/Xylol (56 : 4,5 : 4,5), NCO-Gehalt (blockiert), ca. 2,5 %, Bayer MaterialScience AG, Leverkusen, DE

Die anderen Chemikalien wurden vom Feinchemikalienhandel der Firma Sigma-Aldrich GmbH, Taufkirchen, DE bezogen.

### Beispiel 1:

### nicht erfindungsgemäß, Herstellung einer Butanonoxim-blockierten Vernetzerdispersion

359,0 g Desmodur® Z 4470 M/X wurden bei 70°C in einer Standard-Rührapparatur unter Stickstoffspülung nacheinander versetzt mit einer Lösung aus 4,7 g Dimethylolpropionsäure in 9,4 g N-Methylpyrrolidon (NMP), 37,5 g Carbowax® 750 und 3,39 g Neopentylglykol. Anschließend wurde auf 80°C aufgeheizt und so lang gerührt, bis ein konstanter NCO-Wert von 8,02 % (ber. 8,27 %) erreicht wurde. Es wurde auf 70°C abgekühlt. Dann wurden 71,0 g Butanonoxim so zugegeben, dass die Temperatur in dem Reaktionsgefäß 80°C nicht überschritt. Anschließend wurde bei 80°C weiter gerührt, bis IR-spektroskopisch keine NCO-Gruppen mehr nachweisbar waren , auf 70°C abgekühlt und 2,50 g Dimethylethanolamin zugegeben. Nach weiterem Abkühlen auf 60°C wurde mit 570,8 g entionisiertem Wasser von 25°C dispergiert. Es wurde auf 50°C temperiert, 1 Stunde gerührt und unter Rühren auf Raumtemperatur abkühlen gelassen.

Die erhaltene Dispersion besaß nachfolgende Eigenschaften:

| | |
|---|---|
| Feststoffgehalt | 35,8% |
| pH-Wert | 8,02 |
| Viskosität (Haake Rotationsviskosimeter, 23°C) | 60 mPas |
| Partikelgröße (Laserkorrelationsspektroskopie, LKS) | 99 nm |

### Beispiel 2:

### nicht erfindungsgemäß, Herstellung einer Acetonoxim-blockierten Vernetzerdispersion

466,66 g Desmodur® Z 4470 M/X wurden bei 70°C in einer Standard-Rührapparatur unter Stickstoffspülung versetzt mit einer Lösung aus 13,1 g Dimethylolpropionsäure in 26,2 g N-Methylpyrrolidon (NMP). Anschließend wurde auf 80°C aufgeheizt und so lang gerührt, bis ein NCO-Wert von 9,12 % (ber. 9,17 %) erreicht wurde. Dann wurden 48,75 g Carbowax® 750 zugefügt und bei 75°C gerührt, bis ein NCO-Wert von 7,84 % (ber. 7,87 %) erreicht wurde. Dann wurde auf 70°C abgekühlt und danach 76,0 g Acetonoxim so zugegeben, dass die Temperatur in dem Reaktionsgefäß 80°C nicht überschritt. Anschließend wurde bei 80°C weiter gerührt, bis IR-spektroskopisch keine NCO-Gruppen mehr nachweisbar waren, auf 70°C abgekühlt und 8,70 g Dimethylethanolamin zugegeben. Nach weiterem Abkühlen auf 60°C wurde mit 1548 g entionisiertem Wasser von 25°C dispergiert. Es wurde auf 50°C temperiert, 1 Stunde gerührt und unter Rühren auf Raumtemperatur abkühlen gelassen .

Die erhaltene Dispersion besaß nachfolgende Eigenschaften:

| | |
|---|---|
| Feststoffgehalt | 31,4% |
| pH-Wert | 8,14 |
| Viskosität (Haake Rotationsviskosimeter, 23°C) | 900 mPas |
| Partikelgröße (Laserkorrelationsspektroskopie, LKS) | 45 nm |

### Beispiel 3:

### nicht erfindungsgemäß, Herstellung einer Caprolactam-blockierten Vernetzerdispersion

359,0 g Desmodur® Z 4470 M/X wurden bei 70°C in einer Standard-Rührapparatur unter Stickstoffspülung nacheinander versetzt mit einer Lösung aus 4,7 g Dimethylolpropionsäure in 9,4 g N-Methylpyrrolidon (NMP), 37,5 g Carbowax® 750 und 3,39 g Neopentylglykol. Anschließend wurde auf 80°C aufgeheizt und so lang gerührt, bis ein konstanter NCO-Wert von 8,02 % (ber. 8,27 %) erreicht wurde. Es wurde auf 70°C abgekühlt und dann wurden 92,3 g ε-Caprolactam zugegeben. Anschließend wurde bei 100°C weiter gerührt, bis IR-spektroskopisch keine NCO-Gruppen mehr nachweisbar waren, auf 70°C abgekühlt und 2,50 g Dimethylethanolamin zugegeben. Nach weiterem Abkühlen auf 60°C wurde mit 770,53 g entionisiertem Wasser von 25°C dispergiert. Es wurde auf 50°C temperiert, 1 Stunde gerührt und unter Rühren auf Raumtemperatur abkühlen gelassen.

Die erhaltene Dispersion besaß nachfolgende Eigenschaften:

| | |
|---|---|
| Feststoffgehalt | 36,5% |
| pH-Wert | 7,75 |
| Viskosität (Haake Rotationsviskosimeter, 23°C) | 85 mPas |
| Partikelgröße (Laserkorrelationsspektroskopie, LKS) | 82 nm |

### Beispiel 4:

### erfindungsgemäß, Herstellung einer misch-blockierten Vernetzerdispersion

359,0 g Desmodur® Z 4470 M/X wurden bei 70°C in einer Standard-Rührapparatur unter Stickstoffspülung nacheinander versetzt mit einer Lösung aus 4,7 g Dimethylolpropionsäure in 9,4 g N-Methylpyrrolidon (NMP), 37,5 g Carbowax® 750 und 3,39 g Neopentylglykol. Anschließend wurde auf 80°C aufgeheizt und so lang gerührt, bis ein konstanter NCO-Wert von 8,24 % (ber. 8,27 %) erreicht wurde. Es wurde auf 70°C abgekühlt und dann wurden 63,4 g ε-Caprolactam zugegeben. Anschließend wurde bei 100°C weiter gerührt, bis ein konstanter NCO-Wert von 1,75% (ber. 1,76%) erreicht wurde, auf 75°C abgekühlt und 17,4 g Butanonoxim zugefügt. Es wurde gerührt bis IR-spektroskopisch keine NCO-Gruppen mehr nachweisbar waren, auf 70°C abgekühlt und 2,50 g Dimethylethanolamin zugegeben. Nach weiterem Abkühlen auf 60°C wurde mit 582 g entionisiertem Wasser von 25°C dispergiert. Es wurde auf 50°C temperiert, 1 Stunde gerührt und unter Rühren auf Raumtemperatur abkühlen gelassen.

Die erhaltene Dispersion besaß nachfolgende Eigenschaften:

| | |
|---|---|
| Feststoffgehalt | 35,9% |
| pH-Wert | 8,55 |
| Viskosität (Haake Rotationsviskosimeter, 23°C) | 138 mPas |
| Partikelgröße (Laserkorrelationsspektroskopie, LKS) | 87 nm |

### Beispiel 5:

### erfindungsgemäß, Herstellung einer misch-blockierten Vernetzerdispersion

Es wurde vorgegangen, wie in Beispiel 4 beschrieben, jedoch wurden 74,7 g ε-Caprolactam und 8,7 g Butanonoxim als Blockierungsmittel eingesetzt.

Die erhaltene Dispersion besaß nachfolgende Eigenschaften:

| | |
|---|---|
| Feststoffgehalt | 36,9% |
| pH-Wert | 8,07 |
| Viskosität (Haake Rotationsviskosimeter, 23°C) | 120 mPas |
| Partikelgröße (Laserkorrelationsspektroskopie, LKS) | 88 nm |

### Beispiel 6:

### erfindungsgemäß, Herstellung einer misch-blockierten Vernetzerdispersion

Es wurde vorgegangen, wie in Beispiel 4 beschrieben, jedoch wurden 52,1 g ε-Caprolactam und 26,1 g Butanonoxim als Blockierungsmittel eingesetzt.

Die erhaltene Dispersion besaß nachfolgende Eigenschaften:

| | |
|---|---|
| Feststoffgehalt | 36,3% |
| pH-Wert | 8,62 |
| Viskosität (Haake Rotationsviskosimeter, 23°C) | 113 mPas |
| Partikelgröße (Laserkorrelationsspektroskopie, LKS) | 86 nm |

### Beispiel 7:

### erfindungsgemäß, Herstellung einer misch-blockierten Vernetzerdispersion

Es wurde vorgegangen, wie in Beispiel 4 beschrieben, jedoch wurden statt Buotanonoxim 19,2 g 3,5-Dimethylpyrazol als Blockierungsmittel eingesetzt.

Die erhaltene Dispersion besaß nachfolgende Eigenschaften:

| | |
|---|---|
| Feststoffgehalt | 36,2% |
| pH-Wert | 8,4 |
| Viskosität (Haake Rotationsviskosimeter, 23°C) | 160 mPas |
| Partikelgröße (Laserkorrelationsspektroskopie, LKS) | 97 nm |

### Beispiel 8:

### erfindungsgemäß, Herstellung einer misch-blockierten Vernetzerdispersion

Es wurde vorgegangen, wie in Beispiel 4 beschrieben, jedoch wurden 55,4 g δ-Valerolactam (statt ε-Caprolactam) und 17,4 g Butanonoxim als Blockierungsmittel eingesetzt.

Die erhaltene Dispersion besaß nachfolgende Eigenschaften:

| | |
|---|---|
| Feststoffgehalt | 36,8% |
| pH-Wert | 7,8 |
| Viskosität (Haake Rotationsviskosimeter, 23°C) | 100 mPas |
| Partikelgröße (Laserkorrelationsspektroskopie, LKS) | 93 nm |

Zur Ermittlung der anwendungstechnischen Daten wurden die Lackabmischungen der Beispiele 9 bis 18 gemäß Tabelle 1 formuliert, appliziert und ausgehärtet. Die anwendungstechnischen Daten finden sich in Tabelle 2.

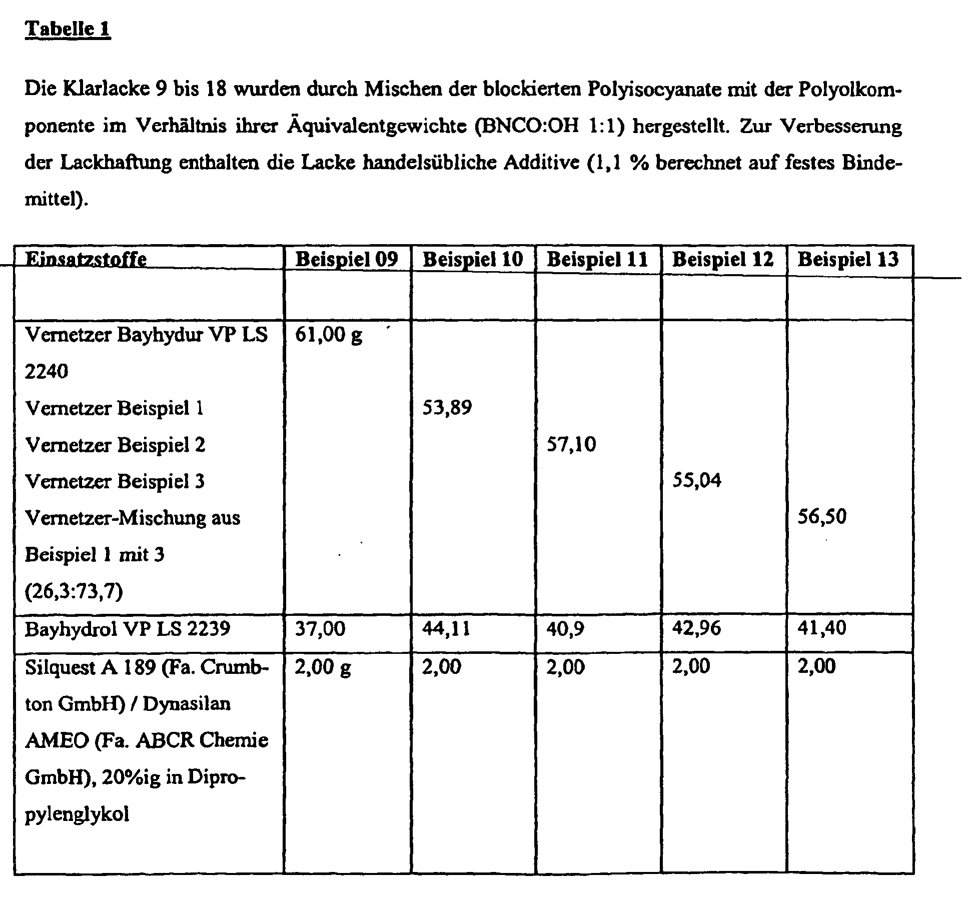

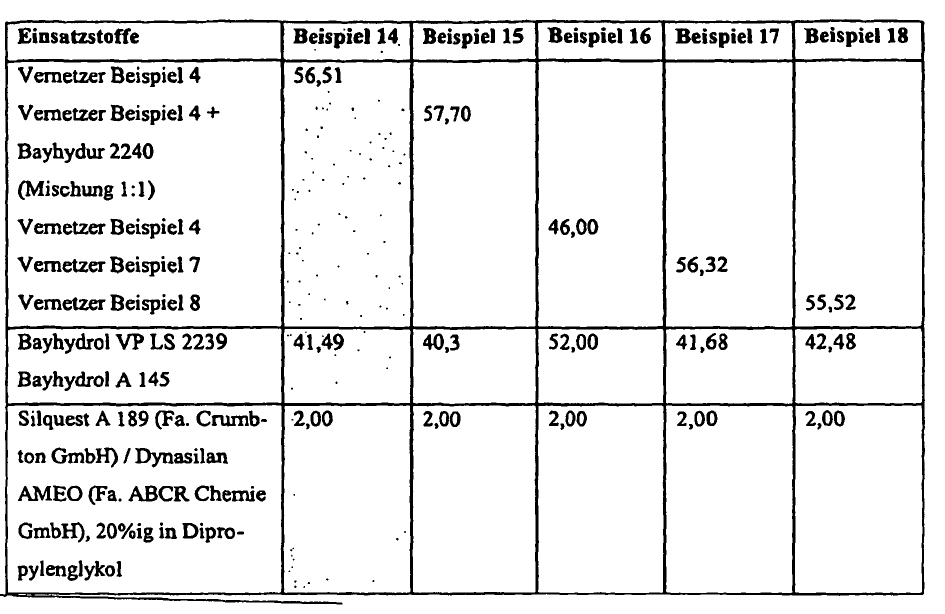

Die obigen Klarlacke wurden auf 3 mm starke Glasplatten der Firma Schlier & Hennes mit einem Rakel der Firma Deka (Rakel Nr. 120) appliziert und für 30 Minuten bei 170°C im Umluftofen eingebrannt. Es ergaben sich Trockenfilmschichtstärken von ca. 25-30 µm.

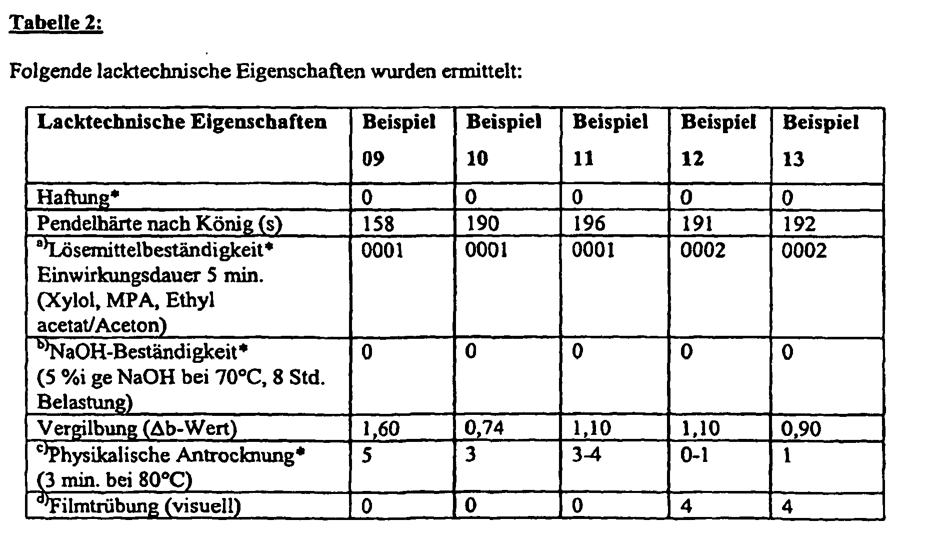

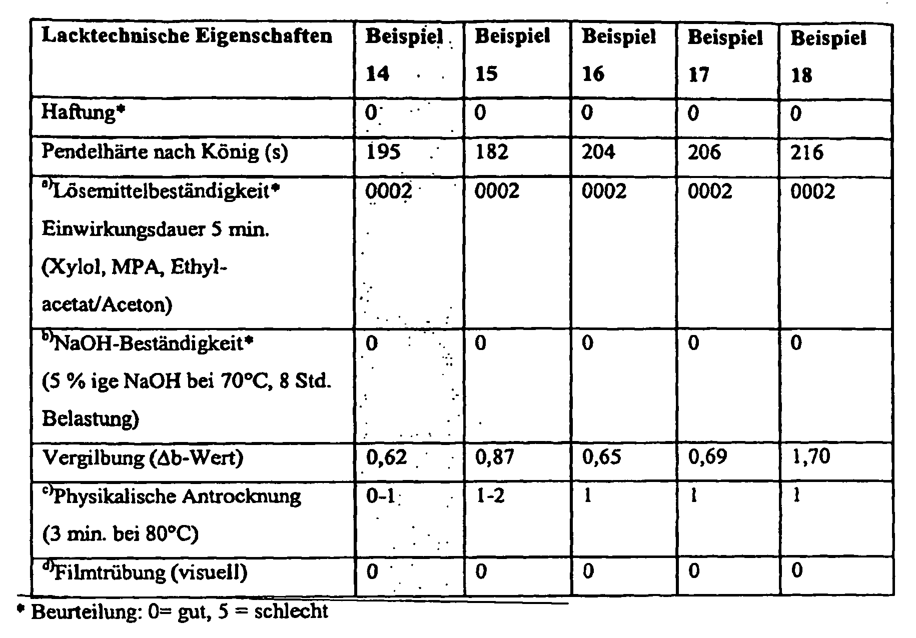

### Prilfmethodenbeschreibungen

### a) Lösemittelbeständigkeit

Zur Ermittlung der Lösemittelbeständigkeit wurde auf ein beschichtetes Substrat ein lösemittelgetränkter Wattebausch gelegt und mit einem Uhrglas abgedeckt. Nach der Einwirkzeit wird der Wattebausch und eventuelle Lösemittelreste entfernt und die Lackoberfläche visuell abgemustert.

### b) Natronlaugebeständigkeit

Zur Bestimmung der Natronlaugebeständigkeit wurden die zu untersuchenden Substrate senkrecht bis zur Hälfte in ein Bad mit 5 %-iger Natronlauge eingetaucht und abgedeckt bei 70°C für 8 h getempert. Anschließend wurden die Platten mit VE-Wasser abgespült und visuell abgemustert.

### c) Physikalische Antrocknung

Für die Untersuchung der physikalischen Antrocknung wurden die entsprechenden Klarlacke auf 3 mm starke Glasplatten der Firma Schlier & Hennes mit einem Rakel der Firma

Deka (Rakel Nr. 120) appliziert, für 3 min. bei 80°C vorgetrocknet auf ihre Klebfreiheit untersucht (0 = klebfrei bis 5 = stark klebrig)

### d) Filmtrübung

Die Lackfilme wurden nach dem Einbrennen auf Trübungserscheinungen visuell beurteilt (0 = ohne Befund bis 5 = stark trüb)

### Anforderungen an die einzelnen lacktechnischen Eigenschaften:

| | |
|---|---|
| a) Haftung: | max. 1 |
| b) Pendelhärte | min. > 140, besser > 150 |
| c) Lösemittelbeständigkeit | jeder Einzelwert maximal 2 |
| d) NaOH-Beständigkeit | max. 1 |
| e) Vergilbung | < 2,0 besser < 1,0 |
| f) Physikalische Antrocknung | max. 2 |
| g) Filmtrübung | max. 1 |

### Bewertung der Ergebnisse:

Bei den nicht erfindungsgemäßen selbstvernetzenden Einbrennsystemen kann mit den Vernetzer-Dispersionen nach dem Stand der Technik kein ausreichendes Eigenschaftsprofil bzgl. physikalischer Antrocknung, geringer Thermovergilbung und Trübungsfreiheit der Schichten erzielt werden (Bsp. 9-12). Auch die in Bsp. 13 gezeigte Abmischung zweier nicht-erfindungsgemäßen Vemetzerdispersionen (Bsp. 1: Oxim-blockiert, Bsp 3: Lactam-blockiert) bei der Herstellung eines selbstvernetzenden Dispersion führte nicht zu akzeptablen Beschichtungen.

Erst bei Einsatz der erfindungsgemäßen Vernetzer-Dispersionen die mit einem Lactam und einem weiteren Blockierungsmittel umgesetzt (Bsp. 14-18) wurden, ist ein optimales Profil der entscheidenden Eigenschaften zu erreichen. Auch die anderen Lackeigenschaften wie die Härte des Lackfilmes, Lösemittelbeständigkeit und Natronlaugebeständigkeit entsprechen den Anforderungen an ein hochwertiges Beschichtungssystem.

## Patentansprüche

1. . Verfahren zur Herstellung wässriger Dispersionen mischblockierter Polyisocyanatprepolymere, bei dem aus
a) 100 Äquivalenten mindestens einer Polyisocyanatkomponente
b) 10 bis 75 Äquivalenten eines Lactams oder mehrerer Lactame, als Blockierungsmittel für Isocyanatgruppen
c) 2 bis 50 Äquivalenten weiterer von b) verschiedener Blockierungsmittel für Isocyanatgruppen.
d) 0 bis 15 Äquivalenten mindestens eines, isocyanatreaktive Gruppen enthaltenden, nichtionischen Hydrophilierungsmittels
e) 0,5 bis 13 Äquivalenten mindestens eines, isocyanatreaktive Gruppen enthaltenden, (potentiell) anionischen Hydrophilierungsmittels
f) 0 bis 30 Äquivalenten einer oder mehrer aminogruppenfreier Verbindungen des
Molekulargewichtsbereichs von 62 bis 250 g/mol, die entweder 2 bis 4 OH-Gruppen oder wenigstens eine OH-Gruppe und eine weitere isocyanatreaktive Gruppe aufweisen und
g) 0 bis 30 Äquivalenten einer oder mehrerer (cyclo)aliphatischer Verbindungen des Molekulargewichtsbereichs von 32 bis 300 g/mol, die entweder 2 bis 4 Aminogruppen oder wenigstens eine Aminogruppe und eine weitere isocyanatreaktive Gruppe aufweisen,
ein Polyisocyanatprepolymer hergestellt wird,
dieses, während oder nach Umsetzung der Komponenten a) bis g) miteinander, in Wasser dispergiert oder gelöst wird,
und vor, während oder nach der Dispergierung, bzw. dem Löseschritt die potentiell anionischen Gruppen der in e) eingesetzten Hydrophilierungsmittel mit einer Base zumindest teilweise deprotoniert werden.

2. . Verfahren zur Herstellung wässriger Dispersionen mischblockierter Polyisocyanatprepolymere gemäß Anspruch 1, **dadurch gekennzeichnet, dass** in Komponente a) Polyisocyanate auf Basis von Hexamethylendiisocyanat, Isophorondiisocyanat und/oder 4,4'-Diisocyanatodicyclohexylmethan eingesetzt werden.

3. . Verfahren zur Herstellung wässriger Dispersionen mischblockierter Polyisocyanatprepolymere gemäß Anspruch 1 oder 2, **dadurch gekennzeichnet, dass** in Komponente b) ε-Caprolactam als Blockierungsmittel verwendet wird.

4. . Verfahren zur Herstellung wässriger Dispersionen mischblockierter Polyisocyanatprepolymere gemäß einem der Ansprüche 1 bis 3, **dadurch gekennzeichnet, dass** in Komponente c) Butanonoxim, Acetonoxim, 3,5-Dimethylpyrazol und/oder deren Gemische als Blockierungsmittel eingesetzt werden.

5. . Verfahren zur Herstellung wässriger Dispersionen mischblockierter Polyisocyanatprepolymere gemäß einem der Ansprüche 1 bis 4, **dadurch gekennzeichnet, dass** das ÄquivalentVerhältnis der Isocyanatkomponente a) zu gegenüber Isocyanat reaktionsfähigen Gruppen der Komponenten b), c), d), f) und g) bei 1:0,7 bis 1:1,3 liegt.

6. . Wässrige Dispersionen mischblockierter Polyisocyanatprepolymere, erhältlich nach einem Verfahren gemäß einem der Ansprüche 1 bis 5.

7. . Verwendung von Dispersionen gemäß Anspruch 6, bei der Herstellung wässriger Beschichtungsmittel.

## Claims

1. Process for preparing aqueous dispersions of polyisocyanate prepolymers with mixed blocking, in which, from
a) 100 equivalents of at least one polyisocyanate component,
b) 10 to 75 equivalents of a lactam or of two or more lactams, as blocking agent(s) for isocyanate groups,
c) 2 to 50 equivalents of further, non-b) blocking agents for isocyanate groups,
d) 0 to 15 equivalents of at least one nonionic hydrophilicizing agent containing isocyanate-reactive groups,
e) 0.5 to 13 equivalents of at least one (potentially) anionic hydrophilicizing agent containing isocyanate-reactive groups,
f) 0 to 30 equivalents of one or more amino-free compounds of the molecular weight range from 62 to 250 g/mol, which contain either 2 to 4 OH groups or at least one OH group and one further isocyanate-reactive group, and
g) 0 to 30 equivalents of one or more (cyclo)aliphatic compounds of the molecular weight range from 32 to 300 g/mol, which contain either 2 to 4 amino groups or at least one amino group and one further isocyanate-reactive group,
a polyisocyanate prepolymer is prepared,
which, during or after reaction of components a) to g) with one another, is dissolved or dispersed in water,
and, before, during or after the dispersing, or the dissolution step, the potentially anionic groups of the hydrophilicizing agents used in e) are at least partly deprotonated with a base.

2. Process for preparing aqueous dispersions of polyisocyanate prepolymers with mixed blocking, according to Claim 1, **characterized in that**, in component a), polyisocyanates based on hexamethylene diisocyanate, isophorone diisocyanate and/or 4,4'-diisocyanatodicyclohexylmethane are used.

3. Process for preparing aqueous dispersions of polyisocyanate prepolymers with mixed blocking, according to Claim 1 or 2, **characterized in that**, in component b), ε-caprolactam is used as blocking agent.

4. Process for preparing aqueous dispersions of polyisocyanate prepolymers with mixed blocking, according to any one of Claims 1 to 3, **characterized in that**, in component c), butanone oxime, acetone oxime, 3,5-dimethylpyrazole and/or mixtures thereof are used as blocking agents.

5. Process for preparing aqueous dispersions of polyisocyanate prepolymers with mixed blocking, according to any one of Claims 1 to 4, **characterized in that** the equivalent ratio of the isocyanate component a) to isocyanate-reactive groups of components b), c), d), f) and g) is 1:0.7 to 1:1.3.

6. Aqueous dispersions of polyisocyanate prepolymers with mixed blocking, obtainable by a process according to any one of Claims 1 to 5.

7. Use of dispersions according to Claim 6 in the preparation of aqueous coating compositions.

## Revendications

1. Procédé pour la préparation de dispersions aqueuses de prépolymères polyisocyanate à blocage mixte, dans lequel on prépare un prépolymère polyisocyanate à partir de
a) 100 équivalents d'au moins un composant polyisocyanate
b) 10 à 75 équivalents d'un lactame ou de plusieurs lactames, en tant qu'agent de blocage pour groupes isocyanate
c) 2 à 50 équivalents d'autres agents de blocage pour groupes isocyanate, différents de b)
d) 0 à 15 équivalents d'au moins un agent d'hydrophilie non ionique, contenant des groupes réactifs avec des isocyanates
e) 0,5 à 13 équivalents d'au moins un agent d'hydrophilie (potentiellement) anionique, contenant des groupes réactifs avec des isocyanates
f) 0 à 30 équivalents d'un ou plusieurs composés exempts de groupes amino, ayant une plage de masse moléculaire de 62 à 250 g/mole, qui comportent soit 2 à 4 groupes OH, soit au moins un groupe OH et un autre groupe réactif avec des isocyanates et
g) 0 à 30 équivalents d'un ou plusieurs composés (cyclo)aliphatiques ayant une plage de masse moléculaire de 32 à 300 g/mole, qui comportent soit 2 à 4 groupes amino, soit au moins un groupe amino et un autre groupe réactif avec des isocyanates,
on le disperse ou dissout dans de l'eau pendant ou après la réaction des composants a) à g) entre eux,
et avant, pendant ou après la dispersion ou l'étape de dissolution on soumet à une au moins partielle déprotonation à l'aide d'une base les groupes potentiellement anioniques de l'agent d'hydrophilie utilisé en e).

2. Procédé pour la préparation de dispersions aqueuses de prépolymères polyisocyanate à blocage mixte selon la revendication 1, **caractérisé en ce qu'**on utilise dans le composant a) des polyisocyanates à base d'hexaméthylènediisocyanate, d'isophorone-diisocyanate et/ou de 4,4'-diisocyanatodicyclohexylméthane.

3. Procédé pour la préparation de dispersions aqueuses de prépolymères polyisocyanate à blocage mixte selon la revendication 1 ou 2, **caractérisé en ce qu'**on utilise comme agent de blocage dans le composant b) l'e-caprolactame.

4. Procédé pour la préparation de dispersions aqueuses de prépolymères polyisocyanate à blocage mixte selon l'une quelconque des revendications 1 à 3, **caractérisé en ce qu'**on utilise comme agent de blocage dans le composant c) la butanonoxime, l'acétonoxime, le 3,5-diméthylpyrazole et/ou des mélanges de ceux-ci.

5. Procédé pour la préparation de dispersions aqueuses de prépolymères polyisocyanate à blocage mixte selon l'une quelconque des revendications 1 à 4, **caractérisé en ce que** le rapport d'équivalents du composant isocyanate a) aux groupes réactifs vis-à-vis d'isocyanate des composants b), c), d), f) et g) vaut de 1:0,7 à 1:1,3.

6. Dispersions aqueuses de prépolymères polyisocyanate à blocage mixte, pouvant être obtenues conformément à un procédé selon l'une quelconque des revendications 1 à 5.

7. Utilisation des dispersions selon la revendication 6, dans la préparation de produits de revêtement aqueux.
